# EUROPÄISCHE PATENTSCHRIFT

(11) **EP 2 220 513 B1**
(45) Veröffentlichungstag und Bekanntmachung des Hinweises auf die Patenterteilung: **04.12.2013**
(21) Anmeldenummer: 08862151.1
(22) Anmeldetag: 15.12.2008
(51) Int. Cl.: G01S 19/02, G01S 19/39

(54) **VERFAHREN ZUM ÜBERTRAGEN ZUSÄTZLICHER INFORMATIONEN MIT NAVIGATIONSNACHRICHTEN IN EINEM SATELLITENNAVIGATIONSSYSTEM**
METHOD FOR THE TRANSMISSION OF ADDITIONAL DATA ALONG WITH NAVIGATION MESSAGES IN A SATELLITE NAVIGATION SYSTEM
PROCÉDÉ DE TRANSMISSION D'INFORMATIONS SUPPLÉMENTAIRES AVEC DES MESSAGES DE NAVIGATION DANS UN SYSTÈME DE NAVIGATION PAR SATELLITE

(30) Priorität: 14.12.2007 DE 102007060901; 11.12.2008 DE 102008061321
(43) Veröffentlichungstag der Anmeldung: 25.08.2010
(73) Patentinhaber: Astrium GmbH, 82024 Taufkirchen (DE)
(72) Erfinder: TRAUTENBERG, Hans L., 85521 Ottobrunn (DE)
(74) Vertreter: Avenhaus, Beate
(86) Internationale Anmeldenummer: PCT/DE2008/002069
(87) Internationale Veröffentlichungsnummer: WO 2009/076936

(56) Entgegenhaltungen:
- WO-A-03/040749
- DE-A1-102005 039 807
- US-A- 5 153 598
- "Navigation Message Data Structure", GLOBAL POSITIONING SYSTEM STANDARD POSITIONING SERVICE SIGNAL SPECIFICATION,, no. 2nd edition, 2 June 1995 (1995-06-02), pages 19-34, XP007917940,

## Beschreibung

Die Erfindung betrifft ein Verfahren zum Übertragen zusätzlicher Informationen mit Navigationsnachrichten in einem Satellitennavigationssystem gemäß Anspruch 1.

Satellitensysteme zur weltweiten Navigation (Global Navigation Satellite System GNSS, kurz Satellitennavigationssystem) werden zur Positionsbestimmung und Navigation auf der Erde und in der Luft eingesetzt. Zur Positionsbestimmung durch einen Empfänger werden im GNSS Navigationsnachrichten mittels der Satellitensignale übertragen. Diese Navigationsnachrichten enthalten u.a. Daten zum Orbit des Satelliten, der das die Nachrichten enthaltende Satellitensignal aussendet. Die Nachrichten werden in bestimmten Zeitabständen übermittelt, um möglichst aktuelle Orbitdaten zur genauen Positionsbestimmung an Empfänger zu übertragen. Beim im Aufbau befindlichen europäischen GNSS Galileo (im Folgenden auch als Galileo-System oder kurz Galileo bezeichnet) werden nach der derzeitigen Spezifikation folgende Parameter zur Orbitbeschreibung in einer Navigationsnachricht verwendet:
- M₀: Mean anomaly at reference time
- Δn: Mean motion difference from computed value
- e: Eccentrity
- A^{1/2}: Square root of the semi major axis
- OMEGA₀: Longitude of ascending node of orbital plane at weekly epoch
- i₀: Orbit inclination angle at reference time
- OMEGA: Argument of perigee
- OMEGADOT: Rate of change of longitude of the ascending node at the weekly epoch
- IDOT: Rate of change of inclination angle
- cuc: Amplitude of the cosine harmonic correction term to the argument of latitude
- cus: Amplitude of the sine harmonic correction term to the argument of latitude
- crc: Amplitude of the cosine harmonic correction term to the orbit radius
- crs: Amplitude of the sine harmonic correction term to the orbit radius
- cic: Amplitude of the cosine harmonic correction term to the angle of inclination
- cis: Amplitude of the sine harmonic correction term to the angle of inclination
- t₀ₑ: Ephemeris reference time

In der Navigationsnachricht für Galileo sind allerdings nur sehr wenige Bits für zukünftige Erweiterungen vorgesehen, was naturgemäß eine spätere Erweiterung des Galileo-Systems um neue Dienste und zusätzliche Informationen beschränkt.

Die DE102005039807A1 beschreibt ein Endgerät zur Nutzung von Satellitennavigationssignalen, das seinen Betriebszustand ansprechend auf ein in einer empfangenen Navigationsnachricht enthaltenes Befehlssignal verändern kann. Für die Übertragung des Befehlssignals können gesonderte Seiten einer Navigationsnachricht verwendet werden. Beispielsweise können bei 30 Seiten die Seiten 1 bis 15 für den eigentlichen Navigationsbetrieb und die Seiten 16 und 17 für die Übermittelung des Befehlssignals verwendet werden.

WO03/040749A beschreibt die Übertragung von Statusnachrichten an Teilnehmer-Endgeräte eines Satelliten-Datenübertragungssystems, insbesondere eines Satelliten-Navigationssystems wie beispielsweise Galileo. Hierzu werden die Statusnachrichten in Datenblocks zerlegt, die kleiner als die Datenblocks von zu übertragenden Nutzdaten sind. Die Datenblocks der Statusnachrichten werden dann in aufeinanderfolgende Datenblocks der Nutzdaten eingefügt.

Die US-A-5153598 beschreibt die Übertragung von Telekommandos mit GPS-Signalen. Nach einer Ausführungsform der beschriebenen Übertragung ist hierzu vorgesehen, dass Abschnitte einer GPS-Navigationsnachricht verändert werden, um das Telekommando in die Nachricht einzubetten. Bei den zu verändernden Abschnitten handelt es sich insbesondere um vier Bits der Worte TLM und HOW am Anfang jedes Subframes der GPS-Navigationsnachricht, die keine Informationen übertragen.

Aufgabe der vorliegenden Erfindung ist es, ein Verfahren zum Übertragen zusätzlicher Informationen mit Navigationsnachrichten in einem Satellitennavigationssystem vorzuschlagen, ohne dass eine wesentliche Veränderung der grundsätzlichen Spezifikation einer Navigationsnachricht erforderlich ist.

Diese Aufgabe wird durch ein Verfahren zum Übertragen zusätzlicher Informationen mit Navigationsnachrichten in einem Satellitennavigationssystem mit den Merkmalen von Anspruch 1 gelöst. Weitere Ausgestaltungen der Erfindung sind Gegenstand der abhängigen Ansprüche.

Ein wesentlicher Gedanke der Erfindung besteht darin, einige oder mehrere Parameter einer Navigationsnachricht zumindest teilweise durch zusätzlich zu übertragende Informationen zu ersetzen. Beispielsweise kann anstelle einiger Parameter einer Navigationsnachricht oder an den am wenigsten signifikanten Stellen dieser Parameter zusätzliche Information übertragen werden, die nichts mit den in einer Navigationsnachricht in der Regel enthaltenen Orbitalparametern zu tun haben muss. Auf diese Weite können elegant zusätzliche Informationen beispielsweise für neue Systemdienste übertragen werden, ohne dass die grundsätzliche Spezifikation einer Navigationsnachricht wesentlich geändert werden müsste.

Die Erfindung betrifft nun gemäß einer Ausführungsform ein Verfahren zum Übertragen zusätzlicher Informationen mit Navigationsnachrichten in einem Satellitennavigationssystem, wobei eine Navigationsnachricht einen oder mehrere Parameter aufweist, mit den folgenden Schritten:
Auswählen mindestens eines Parameters einer Navigationsnachricht für die Übertragung der zusätzlichen Informationen,
zumindest teilweises Ersetzen des ausgewählten mindestens einen Parameters durch die zusätzlichen Informationen und
Aussenden der derart veränderten Navigationsnachricht. Ein derartiges Verfahren kann beispielsweise in Form eines Algorithmus in einer Bodenstation des Satellitennavigationssystems implementiert sein und die Einführung von neuen Diensten ermöglichen, ohne dass die Navigationsnachrichtenstruktur geändert werden muss.

Gemäß einer weiteren Ausführungsform der Erfindung kann ein Parameter mit Orbitaldaten eines Satelliten des Satellitennavigationssystems als der mindestens eine Parameter ausgewählt werden. Dadurch werden zwar die in einer Navigationsnachricht enthaltenden Orbitalparameter verändert, dies kann aber derart erfolgen, dass ein Nutzungssystem von Navigationsnachrichten den durch die Veränderung eingeführten Fehler kaum bemerkt.

In einer weiteren Ausführungsform der Erfindung ist das Satellitennavigationssystem das Galileo-System und als Parameter werden einer oder mehrere der folgenden Parameter ausgewählt: cuc; cus; crc; cic; cis; OMEGADOT; IDOT. Diese Parameter enthalten zumindest teilweise Orbitalparameter und eignen sich für die Übertragung der zusätzlichen Informationen, da der durch diese Informationen eingeführte Fehler entweder klein gehalten werden kann, oder zumindest durch beispielsweise nachfolgenden unveränderte Navigationsnachrichten kompensiert werden kann.

Insbesondere können gemäß einer Ausführungsform der Erfindung die am wenigsten signifikanten Stellen des ausgewählten mindestens einen Parameters durch zusätzliche Informationen ersetzt werden. Die am wenigsten signifikanten Stellen können beispielsweise LSBs (Least Significant Bits) eines Parameters sein. Es können aber auch ganze Bytes oder Worte eines mehrere Bytes bzw. Worte umfassenden Parameters sein, sofern diese ganzen Bytes bzw. Worte die am wenigsten signifikanten Stellen des Parameters sind.

Der Gültigkeitszeitraum einer veränderten Navigationsnachricht kann gemäß einer weiteren Ausführungsform der Erfindung gegenüber dem Gültigkeitszeitraum einer unveränderten Navigationsnachricht derart verringert werden, dass die veränderte Navigationsnachricht Anforderungen des Satellitennavigationssystems an Genauigkeit, Integrität und/oder Kontinuität erfüllt. Die veränderte Nachricht kann beispielsweise häufiger als eine unveränderte Nachricht ausgesendet werden. Der Gültigkeitszeitraum einer veränderten Nachricht kann beispielsweise derart verringert werden, dass er noch länger als die Zeit bis zum (beispielsweise) mindestens übernächsten Wiederholen der Navigationsnachricht im gesendeten Datenstrom eines Satelliten ist, was typischerweise in der Größenordnung von wenigen Minuten ist, und nicht beispielsweise die 110 Minuten erreicht, die derzeit beim Galileo-System vorgesehen sind.

Weiterhin können gemäß einer Ausführungsform der Erfindung die unveränderten Parameter einer veränderten Navigationsnachricht jeweils derart festgelegt werden, dass Abweichungen der Orbits der veränderten Navigationsnachricht und der entsprechenden unveränderten Navigationsnachricht im verringerten Gültigkeitszeitraum genügend klein werden. Beispielsweise können nach einer Veränderung einiger Parameter mit Orbitaldaten durch Einfügen von zusätzlicher Information die übrigen Parameter mit Orbitaldaten an die Änderungen derart angepasst werden, dass der Gesamtfehler, der durch die zusätzlichen zu übertragenden Informationen bewirkt wird, durch die Navigationsnachricht transportierten Orbitaldaten möglichst klein bleibt.

Die Erfindung betrifft weiterhin in einer Ausführungsform ein Satellitennavigationssystem, das ein Raumsegment mit mehreren Satelliten, die Satellitensignale, die Navigationsnachrichten enthalten, zum Empfangen und Auswerten durch Nutzungssysteme für die Positionsbestimmung und Navigation aussenden, und ein Bodensegment mit mehreren Beobachtungs- und Kommandostationen, welche die Satelliten überwachen, umfasst, wobei eine oder mehrere der Beobachtungs- und Kommandostationen ausgebildet sind, ein Verfahren nach der Erfindung und wie oben beschrieben auszuführen, um zusätzliche Informationen zu den Nutzungssystemen zu übertragen. In einem derartigen Satellitennavigationssystem können ohne grundsätzliche Veränderungen der Struktur bzw. Neudefinition der Navigationsnachrichten zusätzliche Informationen übertragen werden.

Ferner sieht die Erfindung in einer Ausführungsform ein Verfahren zum Empfangen von mit einem Verfahren nach der Erfindung und wie oben erläutert übertragenen zusätzlichen Informationen mit den folgenden Schritten vor:
Empfangen einer veränderten Navigationsnachricht und
Ermitteln der in mindestens einem Parameter der empfangenden veränderten Navigationsnachricht enthaltenen zusätzlichen Informationen. Ein derartiges Verfahren kann beispielsweise in Form eines Algorithmus implementiert werden.

Schließlich sieht die Erfindung noch in einer Ausführungsform einen Empfänger für Signale eines Satellitennavigationssystems vor, die Navigationsnachrichten enthalten, wobei der Empfänger zum Ausführen eines Verfahrens zum Empfangen von mit einem Verfahren nach der Erfindung und wie oben erläutert übertragenen zusätzlichen Informationen ausgebildet ist. Beispielsweise kann das Verfahren in der Betriebssoftware eines Empfängers für Navigationsnachrichten, beispielsweise eines Navigationsgerätes, implementiert sein. Dadurch kann die Funktionalität des Empfängers erweitert werden, indem die zusätzlichen Informationen im Empfänger verarbeitet werden, beispielsweise indem durch die zusätzlichen Informationen neue Dienste des Satellitennavigationssystems im Empfänger realisiert werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Satellitennavigationssystem mit einem Ausführungsbeispiel einer Vorrichtung zur Verbesserung der Integritätskommunikation in einem Satellitennavigationssystem gemäß der Erfindung; und
- Fig. 2: ein Flussdiagramm eines Ausführungsbeispiels eines Verfahrens zur Verbesserung der Integritätskommunikation in einem Satellitennavigationssystem gemäß der Erfindung.

Im Folgenden können gleiche und/oder funktional gleiche Elemente mit den gleichen Bezugszeichen versehen sein.

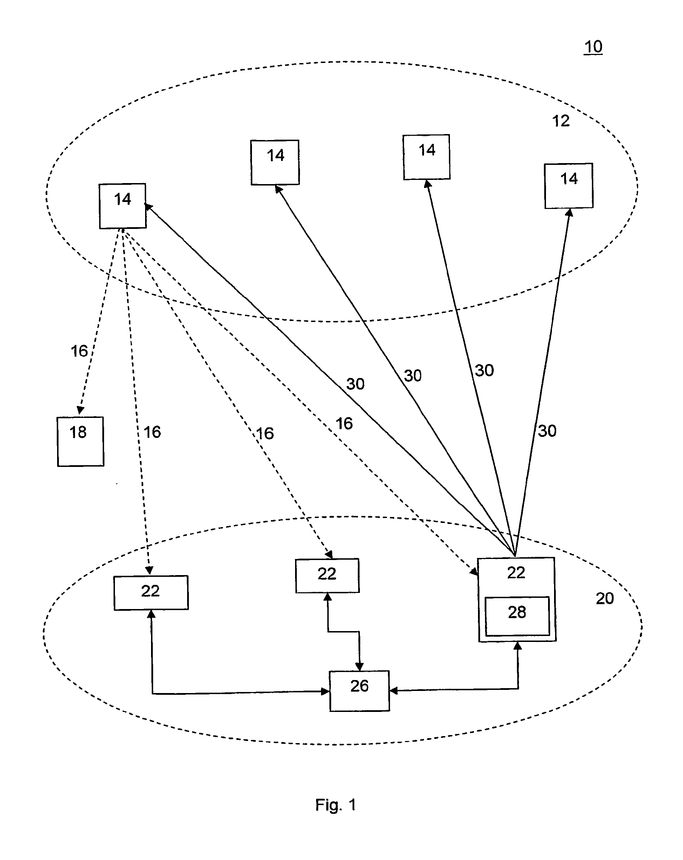

In Fig. 1 ist ein Satellitennavigationssystem 10 mit einem Raumsegment 12 und einem Bodensegment 20 dargestellt. Das Raumsegment 12 umfasst mehrere Satelliten 14, die auf ihrem jeweiligen Orbit um das Bodensegment 20 kreisen. Jeder Satellit sendet Satellitensignale 16 aus, die von Nutzungssystemen 18 wie beispielsweise mobilen Navigationsgeräten sowie von Beobachtungs- und Kommandostationen 22 des Bodensegments 20 empfangen werden können. Die Satellitensignale 16 enthalten Navigationsnachrichten des Satellitennavigationssystems 10, die wiederum die eingangs erwähnten Orbitalparameter zur Orbitbeschreibung enthalten.

Die Beobachtungs- und Kommandostationen 22, die bei Galileo als getrennten Einheiten ausgelegt sind, sind insbesondere zur Überwachung und Steuerung der Satelliten 14 vorgesehen. Hierzu leiten sie empfangene Navigationssignale 16 über ein Kommunikationsnetzwerk an ein Kontrollzentrum 24 weiter, das die empfangenen Navigationssignale 16 auswertet, indem es die mit jedem Navigationssignal 16 übertragenen Daten eines Satelliten 14, insbesondere Orbit und Zeitpunkt der Signalerzeugung sowie Signalstruktur und Integrität der empfangenen Signale überprüft. Die Beobachtungs- und Kommandostationen 22 generieren ferner Navigationsnachrichten 30 und senden diese fortlaufend an die Satelliten 14 zur kontinuierlichen Weiterverteilung an die Nutzungssysteme 18.

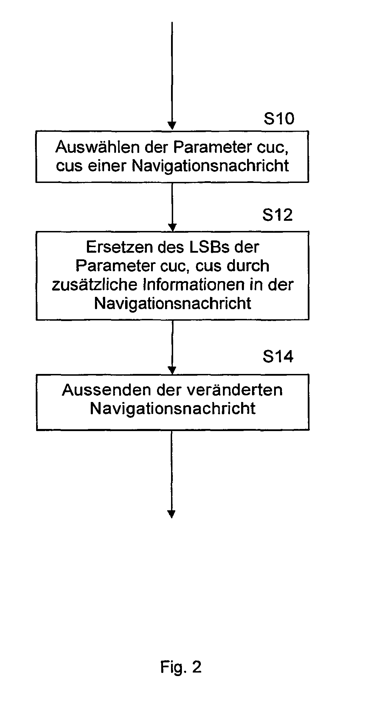

Die Navigationsnachrichten 30 enthalten die eingangs erwähnten Parameter mit Orbitaldaten und können ferner in einer Beobachtungs- und Kommandostation 22 mit zusätzlichen Informationen versehen werden, die über die Satellitensignale 16 in den Navigationsnachrichten eingebettet an die Nutzungssysteme 18 übertragen werden können, beispielsweise Informationen bezüglich Systemerweiterungen. Hierzu weist eine Beobachtungs- und Kommandostation 22 entsprechende Prozessormittel 26 zum Erzeugen von Navigationsnachrichten 30 auf. Die Prozessormittel 26 sind zum Ausführen des in Fig. 2 anhand eines Flussdiagramms grob skizzierten Verfahrens konfiguriert, beispielsweise indem sie entsprechende Algorithmen ausführen.

Gemäß dem in Fig. 2 grob skizzierten Verfahrensablauf werden zunächst im Schritt S10 Orbitalparameter cuc, cus (oder cur, cic, cis) in einer Navigationsnachricht ausgewählt. Anschließend werden im Schritt S12 die am wenigsten signifikanten Stellen, d.h. die LSBs dieser ausgewählten Parameter durch zusätzliche zu übertragende Informationen, die nichts mit Orbitaldaten zu tun haben, ersetzt. Schließlich wird im Schritt S14 die derart veränderte Navigationsnachricht von der Beobachtungs- und Kommandostation 22 ausgesendet, d.h. an Satelliten 14 übertragen, die die empfangene veränderte Nachricht mit ihren Satellitensignalen 16 im Datenstrom an die Nutzungssysteme 18 übertragen.

Um den durch die "Einbettung" zusätzlicher Informationen in die Orbitalparameter in eine veränderte Navigationsnachricht eingeführten Fehler so klein wie möglich zu halten, insbesondere derart klein, dass er möglichst ohne Bedeutung für die Navigation ist, können die Zeiträume, für welche die so veränderte Navigationsnachricht anzuwenden ist, deutlich reduziert werden.

Die Prozessormittel 26 können ferner derart konfiguriert sein, dass die neuen restlichen Parameter mit Orbitaldaten in der Navigationsnachricht jeweils so festgelegt werden, dass die Abweichungen der Orbits der veränderten Navigationsnachricht und der alten unveränderten Navigationsnachricht im neuen kürzeren Gültigkeitszeitraum der neuen veränderten Navigationsnachricht genügend klein werden.

Der Gültigkeitszeitraum der neuen Navigationsnachricht braucht nur gerade so lang sein, dass die Nachricht noch den Anforderungen an Integrität und Kontinuität genügt, bzw. länger als die Zeit bis zum (beispielweise) mindestens übemächsten Wiederholen der Nachricht im gesendeten Datenstrom eines Satelliten sein, was in der Größenordnung von einigen wenigen Minuten ist, und nicht die 110 Minuten erreicht, die im Augenblick vorgesehen sind.

Die neuen Navigationsnachrichten brauchen hierbei nicht unbedingt häufiger von einer Beobachtungs- und Kommandostation 22 zu den Satelliten 14 gesendet werden, da zu den Zeitpunkten, zu welchen die Navigationsnachrichten zu den Satelliten gesendet werden, all die neuen Navigationsnachrichten zum Satelliten gesendet werden können, und die Satelliten dann die empfangenen Navigationsnachrichten abspeichern und zu gegebener Zeit versenden können.

Als weitere Parameter für eine Umdefinition kommen die Parameter IDOT und OMEGADOT in der Spezifikation einer Navigationsnachricht im Galileo-System in Betracht. Es ist übrigens nicht notwendig, alle Parameter auch in einer anderen Bedeutung umzudefinieren.

Durch die Erfindung können für den Orbit vorgesehene Teile bzw. Parameter einer bereits definierten, d.h. durch eine Spezifikation festgelegten Navigationsnachricht (Benutzernachricht) für andere Zwecke verwendet werden. Nutzungssysteme wie Empfänger der Navigationsnachrichten im Nutzungssegment des Satellitennavigationssystems, die von dieser Umdefinition nichts wissen, können die neuen Daten in der alten Weise prozessieren und immer noch gültige Orbits erhalten. Die neuen Orbitalparameter, die vom Satelliten versendet werden, können sich häufiger ändern als beim alten Konzept, doch diese Veränderung ist transparent für ein Nutzungssystem. Nutzungssystem bzw. Empfänger, die von der Umdefinition wissen, können den Orbit genauso wie vor der Umdefinition berechnen, nur können von diesen Nutzungssystemen die Parameter, die eine neue zusätzliche Bedeutung haben, da sie zusätzliche Informationen enthalten, auch zusätzlich zeitgleich in der neuen Bedeutung interpretieren.

### Bezugszeichen

- 10: Satellitennavigationssystem
- 12: Raumsegment
- 14: Satelliten
- 16: Satellitensignale
- 18: Nutzungssysteme
- 20: Bodensegment
- 22: Beobachtungs- und Kommandostationen
- 24: Kontrollzentrum
- 26: Prozessormittel für Navigationsnachrichten 30
- 28: Übertragungsmittel
- 30: Navigationsnachricht einer Beobachtungs- und Kommandostation 22
- S10-S14: Verfahrensschritte

## Patentansprüche

1. Verfahren zum Übertragen zusätzlicher Informationen mit Navigationsnachrichten in einem Satellitennavigationssystem, wobei eine Navigationsnachricht einen oder mehrere Parameter aufweist, mit den folgenden Schritten:
Auswählen mindestens eines Parameters einer Navigationsnachricht für die Übertragung der zusätzlichen Informationen (S10), wobei als der mindestens eine Parameter ein oder mehrere Parameter mit Orbitaldaten eines Satelliten des Satellitennavigationssystems ausgewählt wird,
zumindest teilweises Ersetzen des ausgewählten mindestens einen Parameters durch die zusätzlichen Informationen (S12) und
Aussenden der derart veränderten Navigationsnachricht (S14).

2. Verfahren nach Anspruch 1,
**dadurch gekennzeichnet, dass**
das Satellitennavigationssystem das Galileo-System ist und als Parameter einer oder mehrere der folgenden Parameter ausgewählt wird: cuc; cus; crc; cic; cis; OMEGADOT; IDOT.

3. Verfahren nach Anspruch 1 oder 2,
**dadurch gekennzeichnet, dass**
die am wenigsten signifikanten Stellen des ausgewählten mindestens einen Parameters durch zusätzliche Informationen ersetzt werden.

4. Verfahren nach einem der Ansprüche 1 bis 3,
**dadurch gekennzeichnet, dass**
der Gültigkeitszeitraum einer veränderten Navigationsnachricht gegenüber dem Gültigkeitszeitraum einer unveränderten Navigationsnachricht derart verringert wird, dass die veränderte Navigationsnachricht Anforderungen des Satellitennavigationssystems an Genauigkeit, Integrität und/oder Kontinuität erfüllt.

5. Verfahren nach Anspruch 4,
**dadurch gekennzeichnet, dass**
die unveränderten Parameter einer veränderten Navigationsnachricht jeweils derart festgelegt werden, dass Abweichungen der Orbits der veränderten Navigationsnachricht und der entsprechenden unveränderten Navigationsnachricht im verringerten Gültigkeitszeitraum genügend klein werden.

6. Satellitennavigationssystem (10), das ein Raumsegment (12) mit mehreren Satelliten (14), die Satellitensignale (16), die Navigationsnachrichten enthalten, zum Empfangen und Auswerten durch Nutzungssysteme (18) für die Positionsbestimmung und Navigation aussenden, und ein Bodensegment (20) mit mehreren Beobachtungs- und Kommandostationen (22), welche die Satelliten (14) überwachen, umfasst, wobei eine oder mehrere der Beobachtungs- und Kommandostationen (22) ausgebildet sind, ein Verfahren nach einem der vorhergehenden Ansprüche auszuführen, um zusätzliche Informationen zu den Nutzungssystemen zu übertragen.

7. Verfahren zum Empfangen von mit einem Verfahren nach einem der Ansprüche 1 bis 5 übertragenen zusätzlichen Informationen mit den folgenden Schritten:
Empfangen einer veränderten Navigationsnachricht und
Ermitteln der in mindestens einem Parameter der empfangenden veränderten Navigationsnachricht enthaltenen zusätzlichen Informationen.

8. Empfänger (18) für Signale (16) eines Satellitennavigationssystems (10), die Navigationsnachrichten (30) enthalten, wobei der Empfänger zum Ausführen eines Verfahrens nach Anspruch 7 ausgebildet ist.

## Claims

1. Method for transferring additional information with navigation messages in a satellite navigation system, wherein a navigation message has one or more parameters, having the following steps:
at least one parameter of a navigation message is selected for transferring the additional information (S10), wherein the at least one parameter selected is one or more parameters with orbital data from a satellite in the satellite navigation system,
the selected at least one parameter is at least partially replaced by the additional information (S12), and
the navigation message altered in this manner is transmitted (S14).

2. Method according to Claim 1,
**characterized in that**
the satellite navigation system is the Galileo system and the parameter selected is one or more of the following parameters: cuc; cus; crc; cic; cis; OMEGADOT; IDOT.

3. Method according to Claim 1 or 2,
**characterized in that**
the least significant bits of the selected at least one parameter are replaced by additional information.

4. Method according to one of Claims 1 to 3,
**characterized in that**
the validity period of an altered navigation message is decreased in comparison with the validity period of an unaltered navigation message such that the altered navigation message meets demands of the satellite navigation system in terms of precision, integrity and/or continuity.

5. Method according to Claim 4,
**characterized in that**
the unaltered parameters of an altered navigation message are respectively stipulated such that differences in the orbits of the altered navigation message and the corresponding unaltered navigation message become sufficiently small in the decreased validity period.

6. Satellite navigation system (10) that comprises a space segment (12) having a plurality of satellites (14), which transmit satellite signals (16), which contain navigation messages, for reception and evaluation by use systems (18) for position finding and navigation, and a ground segment (20) having a plurality of observation and command stations (22), which monitor the satellites (14), wherein one or more of the observation and command stations (22) are designed to carry out a method according to one of the preceding claims in order to transfer additional information to the use systems.

7. Method for receiving additional information transferred using a method according to one of Claims 1 to 5, having the following steps:
an altered navigation message is received, and
the additional information contained in at least one parameter of the receiving altered navigation message is ascertained.

8. Receiver (18) for signals (16) from a satellite navigation system (10) that contain navigation messages (30), wherein the receiver is designed for carrying out a method according to Claim 7.

## Revendications

1. Procédé de transmission d'informations supplémentaires comprenant des messages de navigation dans un système de navigation par satellite, dans lequel un message de navigation comporte un ou plusieurs paramètres, comprenant les étapes consistant à :
sélectionner au moins un paramètre d'un message de navigation pour la transmission des informations supplémentaires (S10), dans lequel un ou plusieurs paramètres comportant des données orbitales d'un satellite du système de navigation par satellite est sélectionné en tant que ledit au moins un paramètre,
remplacer au moins partiellement l'au moins un paramètre sélectionné par les informations supplémentaires (S12) et émettre le message de navigation ainsi modifié (S14).

2. Procédé selon la revendication 1, **caractérisé en ce que** le système de navigation par satellite est le système Galileo et **en ce qu'**un ou plusieurs des paramètres suivants sont sélectionnés en tant que paramètre : cuc ; cus ; crc ; cic ; cis ; OMEGADOT ; IDOT.

3. Procédé selon la revendication 1 ou 2, **caractérisé en ce que** les positions les moins significatives dudit au moins un paramètre sélectionné sont remplacées par des informations supplémentaires.

4. Procédé selon l'une quelconque des revendications 1 à 3, **caractérisé en ce que** la période de validité d'un message de navigation modifié est réduite par rapport à la période de validité d'un message de navigation non modifié de manière à ce que le message de navigation modifié satisfasse à des exigences de précision, d'intégrité et/ou de continuité du système de navigation par satellite.

5. Procédé selon la revendication 4, **caractérisé en ce que** les paramètres non modifiés d'un message de navigation modifié sont respectivement fixés de telle manière que des écarts affectant l'orbite du message de navigation modifié et du message de navigation non modifié correspondant soient suffisamment faibles pendant la période de validité réduite.

6. Système de navigation par satellite (10) comprenant un segment spatial (12) comportant de multiples satellites (14) qui émettent des signaux de satellites (16) contenant des messages de navigation destinés à être reçus et exploités par des systèmes utilisateurs (18) pour la détermination de position et la navigation, et un segment sol (2) comportant de multiples stations d'observation et de commandement (22) qui surveillent les satellites (14), dans lequel une ou plusieurs des stations d'observation et de commandement (22) sont conçues pour mettre en oeuvre un procédé selon l'une quelconque des revendications précédentes afin de transmettre des informations supplémentaires aux système utilisateurs.

7. Procédé de réception d'informations supplémentaires transmises au moyen d'un procédé selon l'une quelconque des revendications 1 à 5, consistant à :
recevoir un message de navigation modifié, et
déterminer les informations supplémentaires contenues dans au moins un paramètre du message de navigation modifié reçu.

8. Récepteur (18) destiné à des signaux (16) d'un système de navigation par satellite (10), qui contiennent des messages de navigation (30), dans lequel le récepteur est conçu pour mettre en oeuvre un procédé selon la revendication 7.
